# EUROPEAN PATENT APPLICATION

(11) **EP 3 076 708 A1**
(43) Date of publication of application: **05.10.2016**
(21) Application number: 13899669.9
(22) Date of filing: 20.12.2013
(51) Int. Cl.: H04W 36/02, H04W 84/00

(54) **METHOD AND DEVICE FOR TRANSMITTING DATA**

(71) Applicant: Huawei Technologies Co., Ltd., Longgang District Shenzhen, Guangdong 518129 (CN)
(72) Inventor: XIA, Shenjie, Shenzhen Guangdong 518129 (CN); CHEN, Liuhai, Shenzhen Guangdong 518129 (CN); YAN, Xiaolong, Shenzhen Guangdong 518129 (CN)
(74) Representative: Goddar, Heinz J.
(86) International application number: PCT/CN2013/090150
(87) International publication number: WO 2015/089843

(57) **Abstract**

The present application relates to the field of wireless communications technologies, and in particular, to a method and a device for transmitting data, to solve a problem in the prior art that: a length of downlink transmission interference time may be increased due to a frame loss in a handover process, and consequently it takes a relatively long time for transmitting data at an air interface, and delay of train control data is increased. The method according to embodiments of the present application includes: caching a downlink valid data frame for a user equipment during a handover process of the user equipment; and sending the cached downlink valid data frame after a handover of the user equipment ends. According to the embodiments of the present application, user data is not transmitted at an air interface during a handover process, which prevents the user data from being lost at the air interface during the handover process, eliminates a length of downlink transmission interference time caused by a frame loss during the handover process, and shortens a length of downlink transmission interference time, thereby shortening duration of retransmitting data at the air interface data and delay of train control data.

## Description

### TECHNICAL FIELD

The present application relates to the field of a wireless communications technology, and in particular, to a method and a device for transmitting data.

### BACKGROUND

In an existing GSM-R (Global System for Mobile Communications-Railway, a railway communications system based on a GSM communications standard; GSM, Global System for Mobile Communications, Global System for Mobile Communications) system, CSD (Circuit Switched Data, circuit switched data) is used to carry important data such as train control data of a user. Integrity and security of important data such as train control data directly concern security of a train.

Due to the particularity of a railway, a train moves linearly with a great many handovers, and a handover process causes a CSD link interruption of about 300 ms, and meanwhile, the CSD does not have a retransmission mechanism. Therefore, there is a need for an application layer to determine whether data is correctly transmitted to a peer end, and transmission is triggered only if data is not correctly transmitted to the peer end.

According to a data analysis collected from an existing network (for example, Harbin-Dalian High-Speed Railway), during a peak of data in the existing network, burst continuous data sending lasts no longer than Is, and time consumed by valid user data accounts less than 70%. However, for train control data, simply one bit error will cause retransmission of an entire packet. Therefore, there is a relatively high probability that a handover using the existing technology causes a frame loss in transmission of train control data.

An acceptance indicator is defined for this: transmission interference time, that is, time counted from occurrence of the first errored data frame and to occurrence of the first error-free data frame. The errored data frame means that at least one bit in the received 30-byte data frame is inconsistent with the sent data frame, and the error-free data frame means that bits in the received 30-byte data frame are completely consistent.

A GSM-R network has a high handover frequency, and a loss of CSD packets occurs in transmission. As a result, there is a very high probability that downlink transmission interference time occurs during a handover. The CSD does not have a retransmission mechanism. Retransmission is triggered only after an upper layer, that is, an application layer, has determined a packet loss. In addition, it takes a long time for the application layer to determine whether data has been transmitted to a peer end and trigger retransmission, which extends duration of train control data transmission. Furthermore, a frame loss is caused in a handover process, and a length of downlink transmission interference time is also increased due to the frame loss.

In conclusion, a length of downlink transmission interference time may be increased due to a frame loss in a handover process currently, and consequently it takes a relatively long time for transmitting data at an air interface, and delay of train control data is increased.

### SUMMARY

The present application provides a method and a device for transmitting data, configured to solve a problem in the prior art that: a length of downlink transmission interference time may be increased due to a frame loss in a handover process, and consequently it takes a relatively long time for transmitting data at an air interface, and delay of train control data is increased. According to a first aspect, a method for transmitting data is provided, where the method includes:
caching, by a first network side device, a downlink valid data frame for a user equipment during a handover process of the user equipment; and
sending, by the first network side device, the cached downlink valid data frame after a handover of the user equipment ends.

With reference to the first aspect, in a first possible implementation manner, the caching, by a first network side device, a downlink valid data frame for a user equipment during a handover process of the user equipment includes:
after receiving, over a user data link corresponding to the user equipment, an uplink valid data frame including a flag bit indicating caching, caching, by the first network side device, a downlink valid data frame subsequently received over the user data link, where the flag bit indicating caching is set in the uplink valid data frame by a second network side device during the handover process of the user equipment; and
the sending, by the first network side device, the cached downlink valid data frame after a handover of the user equipment ends includes:
after receiving, over the user data link corresponding to the user equipment, an uplink valid data frame not including a flag bit indicating caching, stopping caching, by the first network side device, and then sending the cached downlink valid data frame, where the flag bit not indicating caching is set in the uplink valid data frame by the second network side device after the handover process of the user equipment ends.

With reference to the first possible implementation manner of the first aspect, in a second possible implementation manner, the first network side device is a transcoder/rate adaptor unit TC in a base station controller BSC, and the second network side device is a base transceiver station BTS.

With reference to the first aspect, in a third possible implementation manner, the caching, by a first network side device, a downlink valid data frame for a user equipment during a handover process of the user equipment includes:
after receiving, from a second network side device, a notification message for caching, caching, by the first network side device, the downlink valid data frame for the user equipment that is received over a user data link corresponding to the user equipment, where the notification message for caching is sent by the second network side device during the handover process of the user equipment; and
the sending, by the first network side device, the cached downlink valid data frame after a handover of the user equipment ends includes:
after receiving, from the second network side device, a notification message for stopping caching, stopping caching, by the first network side device, and then sending the cached downlink valid data frame, where the notification message for stopping caching is sent by the second network side device after the handover of the user equipment ends.

With reference to the third possible implementation manner of the first aspect, in a fourth possible implementation manner, the first network side device is a transcoder/rate adaptor unit TC in a BSC, and the second network side device is a signaling processing unit in the BSC;
the first network side device is an interworking function unit IWF, and the second network side device is a mobile service switching center MSC.

With reference to one of the first aspect and the first possible implementation manner of the first aspect to the fourth possible implementation manner of the first aspect, in a fifth possible implementation manner, before the caching, by the first network side device, the downlink valid data frame for the user equipment that is received over a user data link corresponding to the user equipment, the method further includes:
determining, by the first network side device, that the user equipment has entered a synchronization state.

With reference to one of the first aspect and the first possible implementation manner of the first aspect to the fifth possible implementation manner of the first aspect, in a sixth possible implementation manner, the method further includes:
while caching the downlink valid data frame for the user equipment, sending, by the first network side device, a downlink padding data frame.

According to a second aspect, a method for transmitting data is provided, where the method includes:
notifying, by a second network side device during a handover process of a user equipment, the first network side device of caching a downlink valid data frame received over the user data link; and
notifying, by the second network side device after a handover of the user equipment ends, the first network side device of stopping caching and of sending the cached downlink valid data frame.

With reference to the second aspect, in a first possible implementation manner, the notifying, by a second network side device during a handover process of a user equipment, the first network side device of caching a downlink valid data frame received over the user data link includes:
setting, by the second network side device during the handover process of the user equipment, a protocol reservation flag bit in an uplink valid data frame for the user equipment to indicate caching, and sending, to the first network side device over the user data link corresponding to the user equipment, the uplink valid data frame including the flag bit indicating caching, to notify the first network side device of caching the downlink valid data frame received over the user data link; and
the notifying, by the second network side device after a handover of the user equipment ends, the first network side device of stopping caching and of sending the cached downlink valid data frame includes:
setting, by the second network side after the handover of the user equipment ends, a protocol reservation flag bit in an uplink valid data frame for the user equipment to indicate not caching; and sending, to the first network side device over the user data link corresponding to the user equipment, the uplink valid data frame including the flag bit indicating not caching, to notify the first network side device of stopping caching and of sending the cached downlink valid data frame.

With reference to the first possible implementation manner of the second aspect, in a second possible implementation manner, before the setting, by the second network side device during the handover process of the user equipment, a protocol reservation flag bit in an uplink valid data frame for the user equipment to indicate caching, the method further includes:
enabling, by the second network side device, a cache identifier for the user equipment after receiving a command for a handover; and
the setting, by the second network side device during the handover process of the user equipment, a protocol reservation flag bit in an uplink valid data frame for the user equipment to indicate caching includes:
while processing the uplink valid data frame for the user equipment, determining, by the second network side device, whether the cache identifier for the user equipment is enabled; and
after determining that the cache identifier for the user equipment is enabled, setting the protocol reservation flag bit in the uplink valid data frame for the user equipment to indicate caching.

With reference to the second possible implementation manner of the second aspect, in a third possible implementation manner, before the setting, by the second network side device after the handover of the user equipment ends, a protocol reservation flag bit in an uplink valid data frame for the user equipment to indicate not caching, the method further includes:
stopping, by the second network side device, the enabled cache identifier for the user equipment after the handover of the user equipment ends; and
the setting, by the second network side device, a protocol reservation flag bit in an uplink valid data frame for the user equipment to indicate not caching includes:
while processing the uplink valid data frame for the user equipment, determining, by the second network side device, whether the cache identifier for the user equipment is enabled; and
after determining that the cache identifier for the user equipment is not enabled, setting the protocol reservation flag bit in the uplink valid data frame for the user equipment to indicate not caching.

With reference to the second aspect, and the first possible implementation manner of the second aspect to the third possible implementation manner of the second aspect, in a fourth possible implementation manner, the first network side device is a transcoder/rate adaptor unit TC in a base station controller BSC, and the second network side device is a base transceiver station BTS.

With reference to the second aspect, in a fifth possible implementation manner, the notifying, by a second network side device during a handover process of a user equipment, the first network side device of caching a downlink valid data frame received over the user data link includes:
sending, by the second network side device to the first network side device during the handover process of the user equipment, a notification message for caching, to notify the first network side device of caching the downlink valid data frame received over the user data link; and
the notifying, by the second network side device after a handover of the user equipment ends, the first network side device of stopping caching and of sending the cached downlink valid data frame includes:
sending, by the second network side device to the first network side device after the handover of the user equipment ends, a notification message for stopping caching, to notify the first network side device of stopping caching and of sending the cached downlink valid data frame.

With reference to the fifth possible implementation manner of the second aspect, in a sixth possible implementation manner, the first network side device is a transcoder/rate adaptor unit TC in a BSC, and the second network side device is a signaling processing unit in the BSC;
the first network side device is an interworking function unit IWF, and the second network side device is a mobile service switching center MSC.

With reference to one of the second aspect and the first possible implementation manner of the second aspect to the sixth possible implementation manner of the second aspect, in a seventh possible implementation manner, before the sending, by the second network side device to the first network side device over the user data link link corresponding to the user equipment, the uplink valid data frame including the flag bit indicating caching, the method further includes:
when the second network side device needs to send a handover command to the user equipment, if a downlink valid data frame for the user equipment is currently being sent, sending the handover command to the user equipment after sending of the downlink valid frame data for the user equipment that is currently being sent is complete.

According to a third aspect, a first network side device for transmitting data is provided, where the first network side device includes:
a caching module, configured to cache a downlink valid data frame for a user equipment during a handover process of the user equipment; and
a sending module, configured to send the cached downlink valid data frame after a handover of the user equipment ends.

With reference to the third aspect, in a first possible implementation manner, the caching module is specifically configured to:
after receiving, over a user data link corresponding to the user equipment, an uplink valid data frame including a flag bit indicating caching, cache a downlink valid data frame subsequently received over the user data link, where the flag bit indicating caching is set in the uplink valid data frame by a second network side device during the handover process of the user equipment; and stop caching after receiving an uplink valid data frame not including a flag bit indicating caching through the user data link corresponding to the user equipment, where the flag bit not indicating caching is set in the uplink valid data frame by the second network side device after the handover of the user equipment ends; and
the sending module is specifically configured to:
send the cached downlink valid data frame after the caching module stops caching.

With reference to the first possible implementation manner of the third aspect, in a second possible implementation manner, the first network side device is a transcoder/rate adaptor unit TC in a base station controller BSC, and the second network side device is a base transceiver station BTS.

With reference to the third aspect, in a third possible implementation manner, the caching module is specifically configured to:
after receiving, from a second network side device, a notification message for caching, cache the downlink valid data frame for the user equipment that is received over a user data link corresponding to the user equipment, where the notification message for caching is sent by the second network side device during the handover process of the user equipment; and stop caching after receiving, from the second network side device, a notification message for stopping caching, where the notification message for stopping caching is sent by the second network side device after the handover of the user equipment ends; and
the sending module is specifically configured to:
send the cached downlink valid data frame after the caching module stops caching.

With reference to the third possible implementation manner of the third aspect, in a fourth possible implementation manner, the first network side device is a transcoder/rate adaptor unit TC in a BSC, and the second network side device is a signaling processing unit in the BSC;
the first network side device is an interworking function unit IWF, and the second network side device is a mobile service switching center MSC.

With reference to one of the third aspect and the first possible implementation manner of the third aspect to the fourth possible implementation manner of the third aspect, in a fifth possible implementation manner, the caching module is specifically configured to:
if it is determined that the user equipment has entered a synchronization state, cache the downlink valid data frame for the user equipment that is received over the user data link corresponding to the user equipment.

With reference to one of the third aspect and the first possible implementation manner of the third aspect to the fifth possible implementation manner of the third aspect, the sending module is further configured to:
while the caching module is caching the downlink valid data frame for the user equipment, send a downlink padding data frame.

According to a fourth aspect, a second network side device for transmitting data is provided, where the second network side device includes:
a first notification module, configured to notify, during a handover process of a user equipment, the first network side device of caching a downlink valid data frame received over the user data link; and
a second notification module, configured to notify, after a handover of the user equipment ends, the first network side device of stopping caching and of sending the cached downlink valid data frame.

With reference to the fourth aspect, in a first possible implementation manner, the first notification module is specifically configured to:
during the handover process of the user equipment, set a protocol reservation flag bit in an uplink valid data frame for the user equipment to indicate caching, and send, to the first network side device over the user data link corresponding to the user equipment, the uplink valid data frame including the flag bit indicating caching, to notify the first network side device of caching the downlink valid data frame received over the user data link; and
the second notification module is specifically configured to:
after a handover of the user equipment ends, set a protocol reservation flag bit in an uplink valid data frame for the user equipment to indicate not caching; and send, to the first network side device over the user data link corresponding to the user equipment, the uplink valid data frame including the flag bit indicating not caching, to notify the first network side device of stopping caching and of sending the cached downlink valid data frame.

With reference to the first possible implementation manner of the fourth aspect, in a second possible implementation manner, the first notification module is specifically configured to:
enable a cache identifier for the user equipment after receiving a command for a handover; determine, while processing the uplink valid data frame for the user equipment, whether the cache identifier for the user equipment is enabled; and after determining that the cache identifier for the user equipment is enabled, set the protocol reservation flag bit in the uplink valid data frame for the user equipment to indicate caching.

With reference to the second possible implementation manner of the fourth aspect, in a third possible implementation manner, the second notification module is specifically configured to:
stop the enabled cache identifier for the user equipment after the handover of the user equipment ends; determine, while processing the uplink valid data frame for the user equipment, whether the cache identifier for the user equipment is enabled; and after determining that the cache identifier for the user equipment is not enabled, set the protocol reservation flag bit in the uplink valid data frame for the user equipment to indicate not caching.

With reference to the fourth aspect, the first possible implementation manner of the fourth aspect to the third possible implementation manner of the fourth aspect, in a fourth possible implementation manner, the first network side device is a transcoder/rate adaptor unit TC in a base station controller BSC, and the second network side device is a base transceiver station BTS.

With reference to the fourth aspect, in a fifth possible implementation manner, the first notification module is specifically configured to:
send, to the first network side device during the handover process of the user equipment, a notification message for caching, to notify the first network side device of caching the downlink valid data frame received over the user data link; and
the second notification module is specifically configured to:
send, to the first network side device after a handover of the user equipment ends, a notification message for stopping caching, to notify the first network side device of stopping caching and of sending the cached downlink valid data frame.

With reference to the fifth possible implementation manner of the fourth aspect, in a sixth possible implementation manner, the first network side device is a transcoder/rate adaptor unit TC in a BSC, and the second network side device is a signaling processing unit in the BSC;
the first network side device is an interworking function unit IWF, and the second network side device is a mobile service switching center MSC.

With reference to one of the fourth aspect and the first possible implementation manner of the fourth aspect to the sixth possible implementation manner of the fourth aspect, in a seventh possible implementation manner, the first notification module is further configured to:
when a handover command needs to be sent to the user equipment, if a downlink valid data frame for the user equipment is currently being sent, send the handover command to the user equipment after sending of the downlink valid frame data for the user equipment that is currently being sent is complete.

According to a fifth aspect, a first network side device for transmitting data is provided, where the first network side device includes:
a processor, configured to cache a downlink valid data frame for a user equipment during a handover process of the user equipment, and send the cached downlink valid data frame by using a transceiver after a handover of the user equipment ends; and
the transceiver, configured to receive and transmit data under the control of the processor.

With reference to the fifth aspect, in a first possible implementation manner, the processor is specifically configured to:
after receiving, over a user data link corresponding to the user equipment, an uplink valid data frame including a flag bit indicating caching, cache a downlink valid data frame subsequently received over the user data link, where the flag bit indicating caching is set in the uplink valid data frame by a second network side device during the handover process of the user equipment; and stop caching after receiving, over the user data link corresponding to the user equipment, an uplink valid data frame not including a flag bit indicating caching, and send the downlink valid data frame by using the transceiver, where the flag bit not indicating caching is set in the uplink valid data frame by the second network side device after the handover of the user equipment ends.

With reference to the fifth aspect, in a third possible implementation manner, the processor is specifically configured to:
after receiving, from a second network side device, a notification message for caching, cache the downlink valid data frame for the user equipment that is received over a user data link corresponding to the user equipment, where the notification message for caching is sent by the second network side device during the handover process of the user equipment; and stop caching after receiving, from the second network side device, a notification message for stopping caching, and send the downlink valid data frame by using the transceiver, where the notification message for stopping caching is sent by the second network side device after the handover of the user equipment ends.

With reference to the third possible implementation manner of the fifth aspect, in a fourth possible implementation manner, the first network side device is a transcoder/rate adaptor unit TC in a BSC, and the second network side device is a signaling processing unit in the BSC;
the first network side device is an interworking function unit IWF, and the second network side device is a mobile service switching center MSC.

With reference to one of the fifth aspect and the first possible implementation manner of the fifth aspect to the fourth possible implementation manner of the fifth aspect, in a fifth possible implementation manner, the processor is specifically configured to:
if it is determined that the user equipment has entered a synchronization state, cache the downlink valid data frame for the user equipment that is received over the user data link corresponding to the user equipment.

With reference to one of the fifth aspect and the first possible implementation manner of the fifth aspect to the fifth possible implementation manner of the fifth aspect, the processor is further configured to:
while the caching module is caching the downlink valid data frame for the user equipment, send a downlink padding data frame by using the transceiver.

According to a sixth aspect, a second network side device for transmitting data is provided, where the second network side device includes:
a processor, configured to notify, by using a transceiver during a handover process of a user equipment, the first network side device of caching a downlink valid data frame received over a user data link, and notify, by using the transceiver after a handover of the user equipment ends, the first network side device of stopping caching and of sending the cached downlink valid data frame; and the transceiver, configured to receive and transmit data under the control of the processor.

With reference to the sixth aspect, in a first possible implementation manner, the processor is specifically configured to:
during the handover process of the user equipment, set a protocol reservation flag bit in an uplink valid data frame for the user equipment to indicate caching, and send, to the first network side device over the user data link corresponding to the user equipment, the uplink valid data frame including the flag bit indicating caching, to notify the first network side device of caching the downlink valid data frame received over the user data link; after a handover of the user equipment ends, set a protocol reservation flag bit in an uplink valid data frame for the user equipment to indicate not caching; and send, to the first network side device over the user data link corresponding to the user equipment, the uplink valid data frame including the flag bit indicating not caching, to notify the first network side device of stopping caching and of sending the cached downlink valid data frame.

With reference to the first possible implementation manner of the sixth aspect, in a second possible implementation manner, the processor is specifically configured to:
enable a cache identifier for the user equipment after a command for a handover is received by using the transceiver; determine, while processing the uplink valid data frame for the user equipment, whether the cache identifier for the user equipment is enabled; and after determining that the cache identifier for the user equipment is enabled, set the protocol reservation flag bit in the uplink valid data frame for the user equipment to indicate caching.

With reference to the second possible implementation manner of the sixth aspect, in a third possible implementation manner, the processor is specifically configured to:
stop the enabled cache identifier for the user equipment after the handover of the user equipment ends; determine, while processing the uplink valid data frame for the user equipment, whether the cache identifier for the user equipment is enabled; and after determining that the cache identifier for the user equipment is not enabled, set the protocol reservation flag bit in the uplink valid data frame for the user equipment to indicate not caching.

With reference to the sixth aspect, the first possible implementation manner of the sixth aspect to the third possible implementation manner of the sixth aspect, in a fourth possible implementation manner, the first network side device is a transcoder/rate adaptor unit TC in a base station controller BSC, and the second network side device is a base transceiver station BTS.

With reference to the sixth aspect, in a fifth possible implementation manner, the processor is specifically configured to:
send, to the first network side device by using the transceiver during the handover process of the user equipment, a notification message for caching, to notify the first network side device of caching the downlink valid data frame received over the user data link; send, to the first network side device by using the transceiver after a handover of the user equipment ends, a notification message for stopping caching, to notify the first network side device of stopping caching and of sending the cached downlink valid data frame.

With reference to the fifth possible implementation manner of the sixth aspect, in a sixth possible implementation manner, the first network side device is a transcoder/rate adaptor unit TC in a BSC, and the second network side device is a signaling processing unit in the BSC;
the first network side device is an interworking function unit IWF, and the second network side device is a mobile service switching center MSC.

With reference to one of the sixth aspect and the first possible implementation manner of the sixth aspect to the sixth possible implementation manner of the sixth aspect, in a seventh possible implementation manner, the processor is further configured to:
when a handover command needs to be sent to the user equipment, if a downlink valid data frame for the user equipment is currently being sent, send the handover command to the user equipment after sending of the downlink valid frame data for the user equipment that is currently being sent is complete.

According to embodiments of the present application, during a handover process of a user equipment, a downlink valid data frame for the user equipment is cached, and the cached downlink valid data frame is sent after a handover of the user equipment ends. According to the embodiments of the present application, user data during a handover process is cached and, after a handover ends, is sent, and in this way, user data is not transmitted at an air interface during a handover process, which prevents the user data from being lost at the air interface during the handover process, eliminates a length of downlink transmission interference time caused by a frame loss during the handover process, and shortens a length of downlink transmission interference time, thereby shortening duration of retransmitting data at the air interface data and delay of train control data.

### BRIEF DESCRIPTION OF DRAWINGS

FIG. 1 is a schematic structural diagram of a first network side device according to a first embodiment of the present application;
FIG. 2 is a schematic diagram of a principle of optimizing train control delay according to a second embodiment of the present application;
FIG. 3 is a schematic diagram of a GSM-R system architecture according to a third embodiment of the present application;
FIG. 4 is a schematic structural diagram of a second network side device according to a fourth embodiment of the present application;
FIG. 5 is a schematic structural diagram of a first network side device according to a fifth embodiment of the present application;
FIG. 6 is a schematic structural diagram of a second network side device according to a sixth embodiment of the present application;
FIG. 7 is a schematic flow diagram of a method for transmitting data according to a seventh embodiment of the present application;
FIG. 8 is a schematic flow diagram of a method for transmitting data according to an eighth embodiment of the present application;
FIG. 9 is a schematic flow diagram of a method for performing a handover according to a ninth embodiment of the present application;
FIG. 10 is a schematic flow diagram of a method for performing a handover according to a tenth embodiment of the present application; and
FIG. 11 is a schematic flow diagram of a method for performing a handover according to an eleventh embodiment of the present application.

### DESCRIPTION OF EMBODIMENTS

According to embodiments of the present application, during a handover process of a user equipment, a downlink valid data frame for the user equipment is cached, and after a handover of the user equipment is complete, the cached downlink valid data frame is sent. According to the embodiments of the present application, user data during a handover process is cached and, after a handover ends, is sent, and in this way, user data is not transmitted at an air interface during a handover process, which prevents the user data from being lost at the air interface during the handover process, eliminates a length of downlink transmission interference time caused by a frame loss during the handover process, and shortens a length of downlink transmission interference time, thereby shortening duration of retransmitting data at the air interface data and delay of train control data.

With reference to the drawings, the embodiments of the present application are described in further detail below.

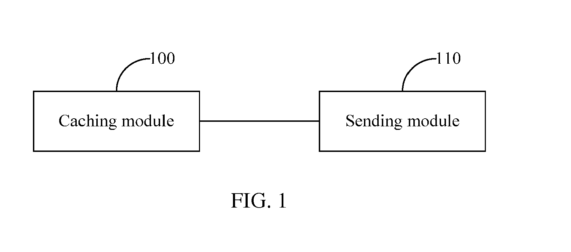

As shown in FIG. 1, a first network side device according to a first embodiment of the present application includes: a caching module 100 and a sending module 110.

The caching module 100 is configured to cache, at the first network side device, a downlink valid data frame for a user equipment during a handover process of the user equipment.

The sending module 110 is configured to send the cached downlink valid data frame after a handover of the user equipment ends.

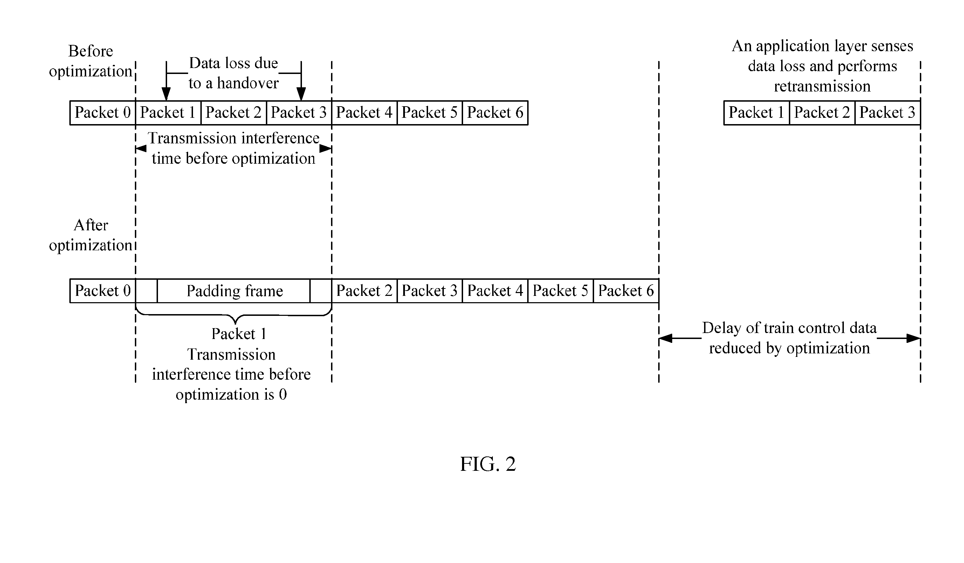

By using solutions of the present application, user data during a handover process may be cached and, after a handover ends, is sent. In this way, user data is not transmitted over an air interface during a handover, which prevents the user data from being lost at the air interface during the handover process, thereby shortening a length of downlink transmission interference time. Because delay duration of transmitting train control data is much less than duration of retransmission after a loss at the air interface (generally, delay time for retransmission after a loss of application layer data is 400 ms or so, but after the solutions of the present application is used, delay time for caching is approximately 100 ms), delay of train control data may be shortened. For details, reference may be made to FIG. 2.

In implementation, the valid data frame according to the embodiments of the present application includes but not limited to a TRAU (transcoder/rate adaptor unit) frame, a V.110 frame, and the like.

A great many specific solutions are available for the caching module 100 to cache the downlink valid data frame for the user equipment at the first network side device during the handover process of the user equipment. The following illustrates several of the solutions. Caching solution 1: Perform the caching according to a flag bit.

Specifically, after receiving, over a user data link corresponding to the user equipment, an uplink valid data frame including a flag bit indicating caching, the caching module 100 caches a downlink valid data frame subsequently received over the user data link, where the flag bit indicating caching is set in the uplink valid data frame by a second network side device during the handover process of the user equipment; and stops caching after receiving, over the user data link corresponding to the user equipment, an uplink valid data frame not including a flag bit indicating caching, where the flag bit not indicating caching is set in the uplink valid data frame by the second network side device after the handover of the user equipment ends

The sending module 110 is specifically configured to:
send the cached downlink valid data frame after the caching module stops caching.

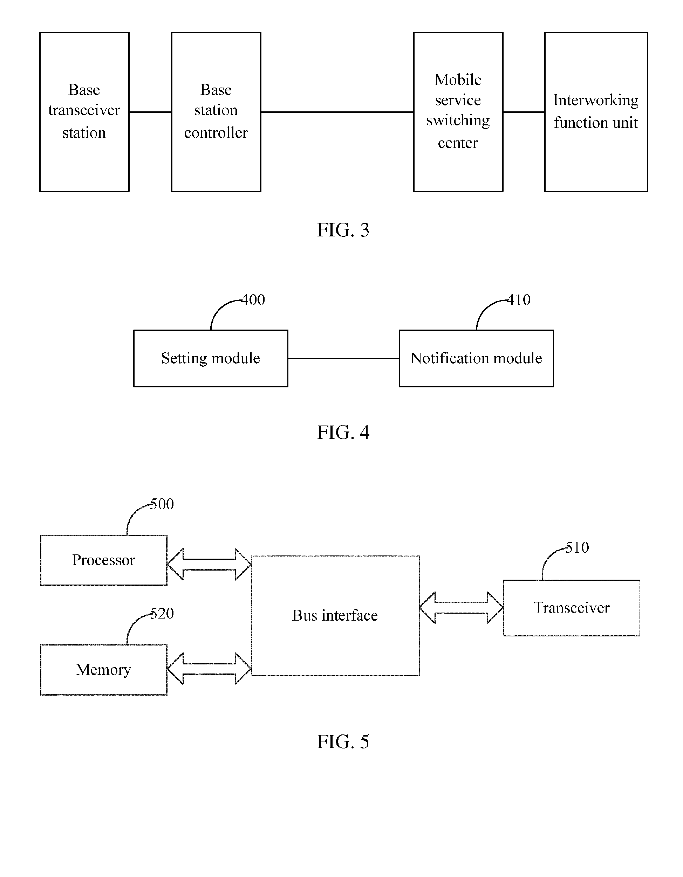

In implementation, during the handover process of the user equipment, the second network side device sets the flag bit in the uplink valid data frame for the user equipment to indicate caching (for specific content of the second device, reference may be made to FIG. 4); Accordingly, after receiving the uplink valid data frame for the user equipment, the caching module 100 checks the flag bit in the uplink valid data frame, and if the flag bit indicates caching, caches a downlink valid frame for the user equipment that is received subsequently; and if the flag bit does not indicate caching, does not perform caching.

Some reservation bits are available in the uplink valid data frame, and one of these reservation bits may be set as the flag bit, such as setting 0 for caching or 1 for not caching. In other words, the second network side device sets, during the handover process of the user equipment, the flag bit in the uplink valid data frame for the user equipment to indicate caching; and
sets, after the handover (including a successful handover or a failed handover) of the user equipment ends, the flag bit in the uplink valid data frame for the user equipment to indicate not caching.

In this manner, the caching module 100 checks the flag bit in the uplink valid data frame in real time, and caches only a corresponding downlink valid data frame received after the received uplink valid data frame including the flag bit indicating caching, which ensures that the cached downlink valid data frame is the downlink valid data frame during the handover process of the user equipment.

To ensure that the user equipment maintains in a synchronization state, preferably, the caching module 100 first determines whether the user equipment has entered the synchronization state, and if the user equipment has entered the synchronization state, caches the downlink valid data frame for the user equipment that is received over the user data link corresponding to the user equipment, and if the user equipment has not entered the synchronization state, does not perform caching processing.

In implementation, the caching module 100 may determine whether the user equipment has entered the synchronization state by checking a synchronization state of a V110 link.

Due to a data link layer between a TC and an IWF, that is, the V110 itself provides a synchronization function, whether the user equipment has entered the synchronization state may be determined by checking the synchronization state of the V110 link.

With respect to the solution 1, the first network side device may be a TC (Transcoder/Rate Adaptor Unit, transcoder/rate adaptor unit) in a BSC (base station controller), and the second network side device may be a BTS (Base Transceiver Station, base transceiver station).

If the second network side device is a BTS, the second network side device may be implemented by means of baseband DSP (Digital Signal Processing, digital signal processing) in the BTS.

Caching solution 2: Perform the caching according to a received notification.

Specifically, after receiving, from a second network side device, a notification message for caching, the caching module 100 caches the downlink valid data frame for the user equipment that is received over a user data link corresponding to the user equipment, where the notification message for caching is sent by the second network side device during the handover process of the user equipment; and stops caching after receiving, from the second network side device, a notification message for stopping caching, where the notification message for stopping caching is sent by the second network side device after the handover of the user equipment ends

The sending module 110 is specifically configured to:
send the cached downlink valid data frame after the caching module stops caching.

In other words, after receiving the notification message for caching, the caching module 100 may determine that the handover of the user equipment starts, and after receiving the notification message for stopping caching, determine that the handover of the user equipment ends. In this way, the caching module 100 only needs to cache downlink valid data frames for the user equipment that are received between the start of the handover and the end of the handover.

To ensure that the user equipment maintains in a synchronization state, preferably, after receiving the notification message for caching, the caching module 100 first determines whether the user equipment has entered the synchronization state, and if the user terminal has entered the synchronization state, caches the downlink valid data frame for the user equipment that is received over the user data link corresponding to the user equipment, and if the user terminal has not entered the synchronization state, does not perform caching processing.

In implementation, after receiving the notification message for caching, the caching module 100 can determine whether the user equipment has entered the synchronization state by checking a synchronization state of a V110 link.

Due to a data link layer between a TC and an IWF (Interworking Function, interworking function), that is, the V110 itself provides a synchronization function, whether the user equipment has entered the synchronization state may be determined by checking the synchronization state of the V110 link.

With respect to solution 2, the first network side device is a TC in a BSC (that is, the first network side device is a TC, and the caching module 100 and the sending module 110 are both in the TC), and the second network side device is a signaling processing unit in the BSC;
the first network side device is an IWF, and the second network side device is an MSC (mobile service switching center).

With respect to caching solution 1 and caching solution 2, while the caching module 100 is caching the downlink valid data frame for the user equipment, the sending module 110 may send a downlink padding data frame, which may ensure the synchronization state of the user equipment.

The downlink valid data frame may be constituted by information of no practical significance, for example, may be the following content:
00 fe fe fe fe bf fe fe fe fe

In implementation, the downlink padding data needs to comply with a format of a synchronous frame in the V.110 protocol, and be filled with correct data rate information, where all state bits are cleared to zero.

For the first network side device according to a first embodiment of the present application, a practical application scenario is implementation in a GSM-R system. For details, reference may be made to FIG. 3.

As shown in FIG. 3, in the schematic diagram of an architecture of a GSM-R system according to a third embodiment of the present application, the device (that is, the first network side device) for executing a caching function may be a TC in a BSC, or may also be an IWF.

If the device with the caching function is a TC in a BSC, the second network side device is the BTS shown in the drawing.

If the device with the caching function is an IWF, the second network side device is the MSC shown in the drawing.

With respect to the first network side device according to a first embodiment of the present application, an embodiment of the present application further provides a device for notifying the first network side device of starting caching and notifying caching. Details are shown in FIG. 4.

As shown in FIG. 4, a second network side device according to a fourth embodiment of the present application includes:
a first notification module 400, configured to notify, during a handover process of a user equipment, the first network side device of caching a downlink valid data frame received over the user data link; and
a second notification module 410, configured to notify, after a handover of the user equipment ends, the first network side device of stopping caching and of sending the cached downlink valid data frame.

A great many specific solutions are available for notifying the first network side device of caching the downlink valid data frame for the user equipment. The following illustrates several of the solutions.

Notification solution 1: Perform the caching according to a flag bit.

The first notification module 400 is specifically configured to:
during the handover process of the user equipment, set a protocol reservation flag bit in an uplink valid data frame for the user equipment to indicate caching, and send, to the first network side device over the user data link corresponding to the user equipment, the uplink valid data frame including the flag bit indicating caching, to notify the first network side device of caching the downlink valid data frame received over the user data link.

The second notification module 410 is specifically configured to:
after a handover of the user equipment ends, set a protocol reservation flag bit in an uplink valid data frame for the user equipment to indicate not caching; and send, to the first network side device over the user data link corresponding to the user equipment, the uplink valid data frame including the flag bit indicating not caching, to notify the first network side device of stopping caching and of sending the cached downlink valid data frame.

In implementation, the flag bit may be a reservation bit in an uplink valid data frame, such as 0 for caching or 1 for not caching.

After receiving a command for a handover, the first notification module 400 may set a protocol reservation flag bit in an uplink valid data frame for the user equipment to indicate caching; and after the handover of the user equipment ends, the second notification module 410 may set a protocol reservation flag bit in an uplink valid data frame for the user equipment to indicate not caching.

If the flag bit is set to indicate caching, the flag bit is used to notify the first network side device of caching the downlink valid data frame received over the user data link.

If the flag bit is set to indicate not caching, the flag bit is used to notify the first network side device of stopping caching the downlink valid data frame received over the user data link.

In implementation, a cache identifier for the user equipment may also be set, and is used to control enabling or disabling of the caching.

Specifically, after receiving the command for a handover, the first notification module 400 enables the cache identifier for the user equipment;

Subsequently, when processing the uplink valid data frame for the user equipment, the first notification module 400 determines whether the cache identifier for the user equipment is enabled; and
after determining that the cache identifier for the user equipment is enabled, sets the protocol reservation flag bit in the uplink valid data frame for the user equipment to indicate caching.

Specifically, after a handover of the user equipment ends (that is, the second network side device knows the handover ends after receiving ending signaling for a handover), the second notification module 410 stops the enabled cache identifier for the user equipment; Subsequently, when processing the uplink valid data frame for the user equipment, the second notification module 410 determines whether the cache identifier for the user equipment is enabled; and
after determining that the cache identifier for the user equipment is not enabled, sets the protocol reservation flag bit in the uplink valid data frame for the user equipment to indicate not caching.

In this case, the first network side device is a transcoder/rate adaptor unit TC in a base station controller BSC, and the second network side device is a base transceiver station BTS.

If the second network side device is a BTS of a source cell, the command for a handover is a handover command.

If the second network side device is a BTS of a target cell, the command for a handover is a handover activation channel command.

Notification solution 2: Send a notification message.

The first notification module 400 is specifically configured to:
send, to the first network side device during the handover process of the user equipment, a notification message for caching, to notify the first network side device of caching the downlink valid data frame received over the user data link.

The second notification module 410 is specifically configured to:
send, to the first network side device after a handover of the user equipment ends, a notification message for stopping caching, to notify the first network side device of stopping caching and of sending the cached downlink valid data frame.

The first network side device is a TC in a BSC, and the second network side device is a signaling processing unit in the BSC;
the first network side device is an IWF, and the second network side device is an MSC.

If the first network side device is a transcoder/rate adaptor unit TC in a BSC, the second network side device is a signaling processing unit in the BSC, and the notification message for caching and the notification message for stopping caching are notification messages inside the device.

If the first network side device is an IWF, the second network side device is an MSC, and the notification message for caching and the notification message for stopping caching are notification messages between the devices.

With respect to the first notification manner and the second notification manner, after the first notification module 400 receives the command for a handover, a downlink valid data frame for the user equipment may be currently being sent, that is, only a part of an entire downlink valid data frame has been sent, if a notification message for caching is sent to the user equipment at this time, the other part of the downlink valid data frame may get lost, which may cause the user equipment to fail to correctly receive the downlink valid data frame. With respect to the above situation, an exemplary manner is to delay sending of the handover command.

Specifically, when the first notification module 400 needs to send a handover command to the user equipment, if a downlink valid data frame for the user equipment is currently being sent, the handover command is sent to the user equipment after sending of the downlink valid frame data for the user equipment that is currently being sent is complete.

In addition to the structure shown in FIG. 1, the first network side device according to the embodiment of the present application has another structure. For details, reference may be made to FIG. 5.

As shown in FIG. 5, a first network side device according to a fifth embodiment of the present application includes:
a processor 500, configured to cache a downlink valid data frame for a user equipment during a handover process of the user equipment and send, by using a transceiver 510, the cached downlink valid data frame after a handover of the user equipment ends; and
the transceiver 510, configured to receive and transmit data under the control of the processor 500.

Preferably, the processor 500 is specifically configured to:
after receiving, over a user data link corresponding to the user equipment, an uplink valid data frame including a flag bit indicating caching, cache a downlink valid data frame subsequently received over the user data link, where the flag bit indicating caching is set in the uplink valid data frame by a second network side device during the handover process of the user equipment; and stop caching after receiving, over the user data link corresponding to the user equipment, an uplink valid data frame not including a flag bit indicating caching, and send the downlink valid data frame by using the transceiver 510, where the flag bit not indicating caching is set in the uplink valid data frame by the second network side device after the handover of the user equipment ends.

Preferably, the processor 500 is specifically configured to:
after receiving, from a second network side device, a notification message for caching, cache the downlink valid data frame for the user equipment that is received over a user data link corresponding to the user equipment, where the notification message for caching is sent by the second network side device during the handover process of the user equipment; and stop caching after receiving, from the second network side device, a notification message for stopping caching, and send the downlink valid data frame by using the transceiver 510, where the notification message for stopping caching is sent by the second network side device after the handover of the user equipment ends.

Preferably, the processor 500 is specifically configured to:
if it is determined that the user equipment has entered a synchronization state, cache the downlink valid data frame for the user equipment that is received over the user data link corresponding to the user equipment.

Preferably, the processor 500 is further configured to:
while the caching module is caching the downlink valid data frame for the user equipment, send a downlink padding data frame by using the transceiver 510.

In FIG. 5, a bus architecture may include a random number of interconnected buses and bridges, which, in particular, linked by various circuits including one or more processors represented by the processor 500 and a memory represented by a memory 520. In the bus architecture, various other circuits such as a peripheral device, a voltage stabilizer and a power management circuit may be further linked together, which are well known in the art and therefore are not further described herein. A bus interface provides an interface. The transceiver 510 may be a plurality of elements, that is, may include a transmitter and a receiver, which provide units on a transmission medium for communicating with other apparatuses. The processor 500 is responsible for managing the bus architecture and performing common processing, and the memory 520 may store data used by the processor 500 when the processor 500 is performing an operation.

The processor 500 is responsible for managing the bus architecture and performing common processing, and the memory 520 can store data used by the processor 500 when the processor 500 is performing an operation.

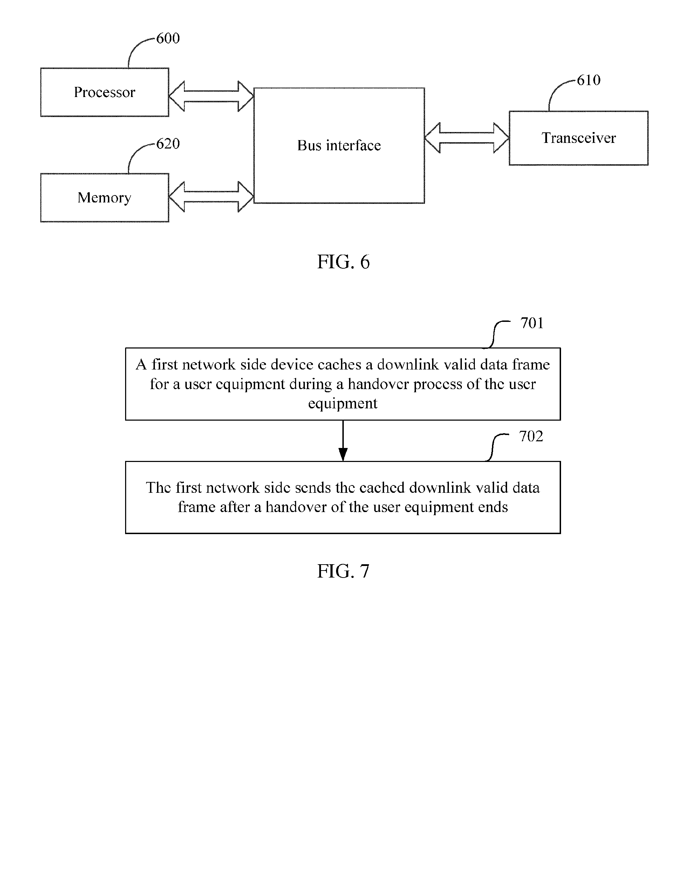

In addition to the structure in FIG. 4, the second network side device according to the embodiment of the present application has another structure. For details, reference may be made to FIG. 6.

As shown in FIG. 6, a second network side device according to a sixth embodiment of the present application includes:
a processor 600, configured to notify, by using a transceiver 610 during a handover process of a user equipment, the first network side device of caching a downlink valid data frame received over the user data link, and notify, by using the transceiver 610 after a handover of the user equipment ends, the first network side device of stopping caching and of sending the cached downlink valid data frame; and
the transceiver 610, configured to receive and transmit data under the control of the processor 600.

Preferably, the processor 600 is specifically configured to:
during the handover process of the user equipment, set a protocol reservation flag bit in an uplink valid data frame for the user equipment to indicate caching, and send, to the first network side device over the user data link corresponding to the user equipment, the uplink valid data frame including the flag bit indicating caching, to notify the first network side device of caching the downlink valid data frame received over the user data link; after a handover of the user equipment ends, set a protocol reservation flag bit in an uplink valid data frame for the user equipment to indicate not caching; and send, to the first network side device over the user data link corresponding to the user equipment, the uplink valid data frame including the flag bit indicating not caching, to notify the first network side device of stopping caching and of sending the cached downlink valid data frame.

Preferably, the processor 600 is specifically configured to: enable a cache identifier for the user equipment after a command for a handover is received by using the transceiver 610; determine, while processing the uplink valid data frame for the user equipment, whether the cache identifier for the user equipment is enabled; and after determining that the cache identifier for the user equipment is enabled, set the protocol reservation flag bit in the uplink valid data frame for the user equipment to indicate caching.

Preferably, the processor 600 is specifically configured to:
stop the enabled cache identifier for the user equipment after the handover of the user equipment ends; determine, while processing the uplink valid data frame for the user equipment, whether the cache identifier for the user equipment is enabled; and after determining that the cache identifier for the user equipment is not enabled, set the protocol reservation flag bit in the uplink valid data frame for the user equipment to indicate not caching.

Preferably, the processor 600 is specifically configured to:
send, to the first network side device by using the transceiver 610 during the handover process of the user equipment, a notification message for caching, to notify the first network side device of caching the downlink valid data frame received over the user data link; send, to the first network side device by using the transceiver 610 after a handover of the user equipment ends, a notification message for stopping caching, to notify the first network side device of stopping caching and of sending the cached downlink valid data frame.

Preferably, the processor 600 is further configured to:
when a handover command needs to be sent to the user equipment, if a downlink valid data frame for the user equipment is currently being sent, send the handover command to the user equipment after sending of the downlink valid frame data for the user equipment that is currently being sent is complete.

In FIG. 6, a bus architecture may include a random number of interconnected buses and bridges, which, in particular, linked by various circuits including one or more processors represented by the processor 600 and a memory represented by a memory 620. In the bus architecture, various other circuits such as a peripheral device, a voltage stabilizer and a power management circuit may be further linked together, which are well known in the art and therefore are not further described herein. A bus interface provides an interface. The transceiver 610 may be a plurality of elements, that is, may include a transmitter and a receiver, which provide units on a transmission medium for communicating with other apparatuses. The processor 600 is responsible for managing the bus architecture and performing common processing, and the memory 620 may store data used by the processor 600 when the processor 600 is performing an operation.

The processor 600 is responsible for managing the bus architecture and performing common processing, and the memory 620 can store data used by the processor 600 when the processor 600 is performing an operation.

Based on a same inventive concept, an embodiment of the present application further provides a method for transmitting data. Because problem solving principles of the method according to the embodiments of the present are similar to problem solving principles of the device according to the embodiments of the present application, for the implementation of the method according to the embodiment of the present application, reference may be made to the implementation of the device according to the embodiment of the present application, and repetitions will not be described herein again.

With respect to the first network side device according to the embodiment of the present application, the present application further provides a method for transmitting data by a first network side device. For details, reference may be made to FIG. 7.

As shown in FIG. 7, a method for transmitting data according to a seventh embodiment of the present application includes:
Step 701. A first network side device caches a downlink valid data frame for a user equipment during a handover process of the user equipment.
Step 702. The first network side device sends the cached downlink valid data frame after a handover of the user equipment ends.

Preferably, that a first network side device caches a downlink valid data frame for a user equipment during a handover process of the user equipment includes:
after receiving, over a user data link corresponding to the user equipment, an uplink valid data frame including a flag bit indicating caching, caching, by the first network side device, a downlink valid data frame subsequently received over the user data link, where the flag bit indicating caching is set in the uplink valid data frame by a second network side device during the handover process of the user equipment; and
that the first network side device sends the cached downlink valid data frame after a handover of the user equipment ends includes:
after receiving, over the user data link corresponding to the user equipment, an uplink valid data frame not including a flag bit indicating caching, stopping caching, by the first network side device, and then sending the cached downlink valid data frame, where the flag bit not indicating caching is set in the uplink valid data frame by the second network side device after the handover of the user equipment ends.

Preferably, the first network side device is a transcoder/rate adaptor unit TC in a base station controller BSC, and the second network side device is a base transceiver station BTS. Preferably, that a first network side device caches a downlink valid data frame for a user equipment during a handover process of the user equipment includes:
after receiving, from a second network side device, a notification message for caching, caching, by the first network side device, the downlink valid data frame for the user equipment that is received over the user data link corresponding to the user equipment, where the notification message for caching is sent by the second network side device during the handover process of the user equipment; and
that the first network side device sends the cached downlink valid data frame after a handover of the user equipment ends includes:
after receiving, from the second network side device, a notification message for stopping caching, stopping caching, by the first network side device, and then sending the cached downlink valid data frame, where the notification message for stopping caching is sent by the second network side device after the handover of the user equipment ends.

Preferably, the first network side device is a transcoder/rate adaptor unit TC in a BSC, and the second network side device is a signaling processing unit in the BSC;
the first network side device is an interworking function unit IWF, and the second network side device is a mobile service switching center MSC.

Preferably, before the first network side device caches the downlink valid data frame for the user equipment that is received over a user data link corresponding to the user equipment, the method further includes:
determining, by the first network side device, that the user equipment has entered a synchronization state.

Preferably, the method further includes:
while caching the downlink valid data frame for the user equipment, sending, by the first network side device, a downlink padding data frame.

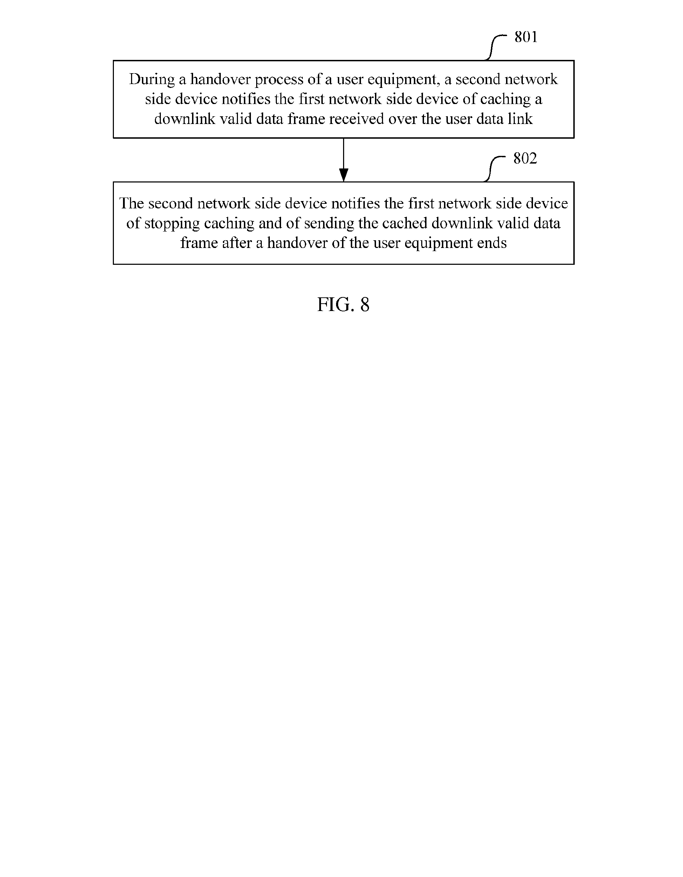

For the second network side device according to the embodiment of the present application, the present application further provides a method for transmitting data by a second network side device. For details, reference may be made to FIG. 8.

As shown in FIG. 8, a method for transmitting data according to an eighth embodiment of the present application includes:
Step 801. During a handover process of a user equipment, a second network side device notifies the first network side device of caching a downlink valid data frame received over the user data link.
Step 802. After a handover of the user equipment ends, the second network side device notifies the first network side device of stopping caching and of sending the cached downlink valid data frame.

Preferably, that during a handover process of a user equipment, a second network side device notifies the first network side device of caching a downlink valid data frame received over the user data link includes:
setting, by the second network side device during the handover process of the user equipment, a protocol reservation flag bit in an uplink valid data frame for the user equipment to indicate caching, and sending, to the first network side device over the user data link corresponding to the user equipment, the uplink valid data frame including the flag bit indicating caching, to notify the first network side device of caching the downlink valid data frame received over the user data link; and
that after a handover of the user equipment ends, the second network side device notifies the first network side device of stopping caching and of sending the cached downlink valid data frame includes:
setting, by the second network side after the handover of the user equipment ends, a protocol reservation flag bit in an uplink valid data frame for the user equipment to indicate not caching; and sending, to the first network side device over the user data link corresponding to the user equipment, the uplink valid data frame including the flag bit indicating not caching, to notify the first network side device of stopping caching and of sending the cached downlink valid data frame.

Preferably, before the setting, by the second network side device during the handover process of the user equipment, a protocol reservation flag bit in an uplink valid data frame for the user equipment to indicate caching, the method further includes:
enabling, by the second network side device, a cache identifier for the user equipment after receiving a command for a handover; and
the setting, by the second network side device during the handover process of the user equipment, a protocol reservation flag bit in an uplink valid data frame for the user equipment to indicate caching includes:
while processing the uplink valid data frame for the user equipment, determining, by the second network side device, whether the cache identifier for the user equipment is enabled; and
after determining that the cache identifier for the user equipment is enabled, setting the protocol reservation flag bit in the uplink valid data frame for the user equipment to indicate caching.

Preferably, before the setting, by the second network side device after the handover of the user equipment ends, a protocol reservation flag bit in an uplink valid data frame for the user equipment to indicate not caching, the method further includes:
stopping, by the second network side device, the enabled cache identifier for the user equipment after the handover of the user equipment ends; and
the setting, by the second network side device, a protocol reservation flag bit in an uplink valid data frame for the user equipment to indicate not caching includes:
while processing the uplink valid data frame for the user equipment, determining, by the second network side device, whether the cache identifier for the user equipment is enabled; and
after determining that the cache identifier for the user equipment is not enabled, setting the protocol reservation flag bit in the uplink valid data frame for the user equipment to indicate not caching.

Preferably, the first network side device is a transcoder/rate adaptor unit TC in a BSC, and the second network side device is a BTS.

Preferably, that during a handover process of a user equipment, a second network side device notifies the first network side device of caching a downlink valid data frame received over the user data link includes:
sending, by the second network side device to the first network side device during the handover process of the user equipment, a notification message for caching, to notify the first network side device of caching the downlink valid data frame received over the user data link; and
that after a handover of the user equipment ends, the second network side device notifies the first network side device of stopping caching and of sending the cached downlink valid data frame includes:
sending, by the second network side device to the first network side device after the handover of the user equipment ends, a notification message for stopping caching, to notify the first network side device of stopping caching and of sending the cached downlink valid data frame.

Preferably, the first network side device is a TC in a BSC, and the second network side device is a signaling processing unit in the BSC;
the first network side device is an IWF, and the second network side device is an MSC.

Preferably, before the sending, by the second network side device to the first network side device over the user data link link corresponding to the user equipment, the uplink valid data frame including the flag bit indicating caching, the method further includes:
when the second network side device needs to send a handover command to the user equipment, if a downlink valid data frame for the user equipment is currently being sent, sending the handover command to the user equipment after sending of the downlink valid frame data for the user equipment that is currently being sent is complete.

Based on the solution for caching during a handover process according to the embodiment of the present application, the embodiment of the present application further provides a method for performing a handover.

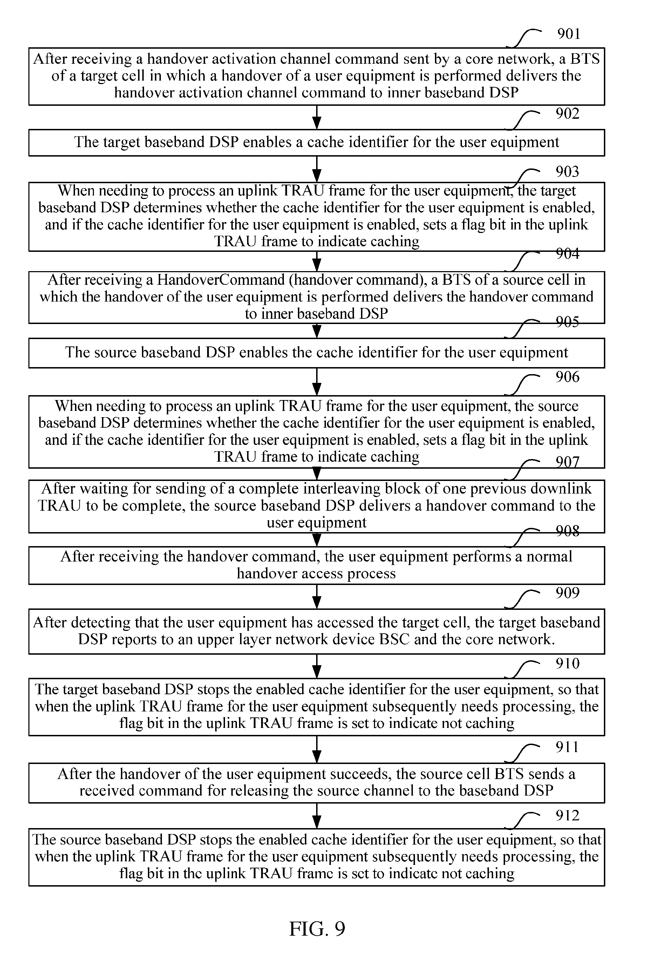

FIG. 9 is a flowchart of a method for a successful handover;

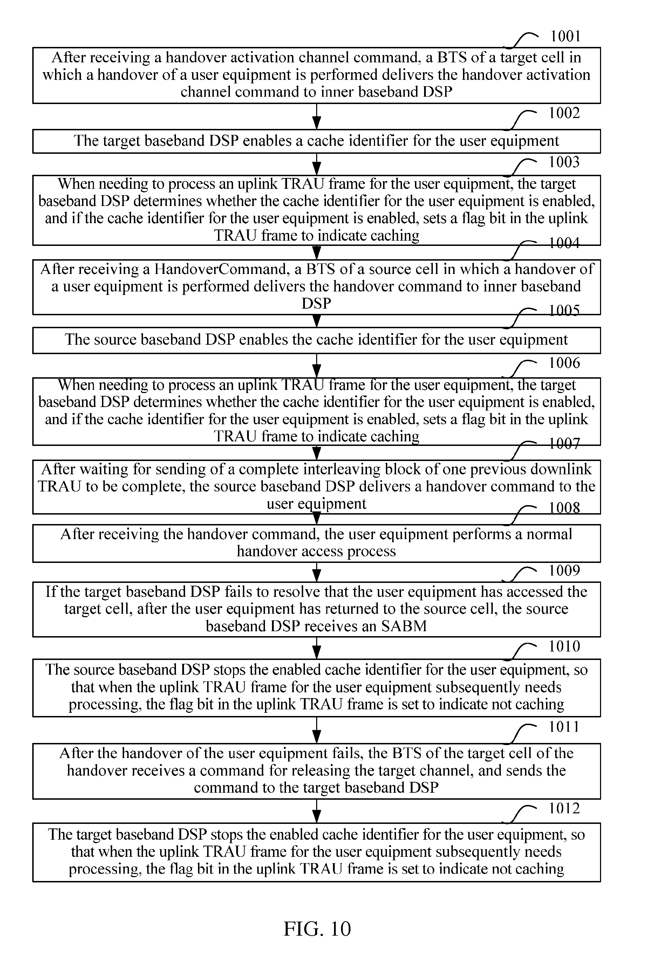

FIG. 10 is a flowchart of a handover failure that is caused because a DSP fails to resolve that a user equipment has accessed a target cell; and

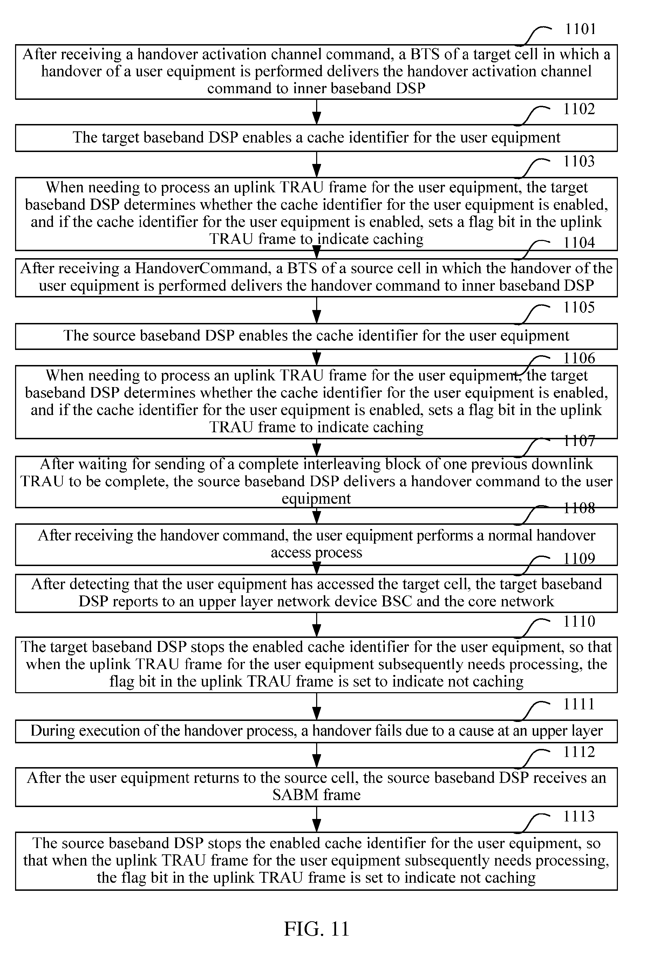

FIG. 11 is a flowchart of a handover failure that is caused due to a cause at an upper layer.

As shown in FIG. 9, a method for performing a handover according to a ninth embodiment of the present application includes:
Step 901: After receiving a handover activation channel command sent by a core network, a BTS of a target cell in which a handover of a user equipment is performed delivers the handover activation channel command to inner baseband DSP (hereafter referred to as target baseband DSP for short).
Step 902: The target baseband DSP enables a cache identifier for the user equipment.
Step 903: When needing to process an uplink TRAU frame for the user equipment, the target baseband DSP determines whether the cache identifier for the user equipment is enabled, and if the cache identifier for the user equipment is enabled, sets a flag bit in the uplink TRAU frame to indicate caching.

For example, the flag bit may be 1 bit, 0 for caching or 1 for not caching; and if the cache identifier for the user equipment is enabled, the flag bit may be set to 0.
Step 904: After receiving a HandoverCommand (handover command), a BTS of a source cell in which the handover of the user equipment is performed delivers the handover command to inner baseband DSP (hereafter referred to as source baseband DSP for short).
Step 905: The source baseband DSP enables the cache identifier for the user equipment.
Step 906: When needing to process an uplink TRAU frame for the user equipment, the source baseband DSP determines whether the cache identifier for the user equipment is enabled, and if the cache identifier for the user equipment is enabled, sets a flag bit in the uplink TRAU frame to indicate caching.

For example, the flag bit may be 1 bit, 0 for caching or 1 for not caching; and if the cache identifier for the user equipment is enabled, the flag bit may be set to 0.
Step 907: After waiting for sending of a complete interleaving block of one previous downlink TRAU to be complete, the source baseband DSP delivers a handover command to the user equipment.
Step 908: After receiving the handover command, the user equipment performs a normal handover access process.
Step 909: After detecting that the user equipment has accessed the target cell, the target baseband DSP reports to an upper layer network device BSC and the core network.
Step 910: The target baseband DSP stops the enabled cache identifier for the user equipment, so that when the uplink TRAU frame for the user equipment subsequently needs processing, the flag bit in the uplink TRAU frame is set to indicate not caching.
Step 911: After the handover of the user equipment succeeds, the source cell BTS sends a received command for releasing the source channel to the baseband DSP.
Step 912: The source baseband DSP stops the enabled cache identifier for the user equipment, so that when the uplink TRAU frame for the user equipment subsequently needs processing, the flag bit in the uplink TRAU frame is set to indicate not caching.

With respect to a TC in the BSC, the cache flag bit in the uplink TRAU frame for the user equipment needs real-time monitoring, and if the cache flag bit indicates caching, the downlink TRAU frame for the user equipment needs to be cached and, after a handover of the user equipment ends, to be sent, and if the cache flag bit does not indicate caching, the downlink TRAU frame is processed normally and not cached.

In implementation, step 903 and step 906 are not necessarily subject to a chronological sequence, and if the target baseband DSP has an uplink TRAU frame that needs processing, step 903 is performed; if the source baseband DSP has an uplink TRAU frame that needs processing, step 906 is performed.

As shown in FIG. 10, a method for performing a handover according to a tenth embodiment of the present application includes:
Step 1001: After receiving a handover activation channel command, a BTS of a target cell in which a handover of a user equipment is performed delivers the handover activation channel command to inner baseband DSP (hereafter referred to as target baseband DSP for short).
Step 1002: The target baseband DSP enables a cache identifier for the user equipment.
Step 1003: When needing to process an uplink TRAU frame for the user equipment, the target baseband DSP determines whether the cache identifier for the user equipment is enabled, and if the cache identifier for the user equipment is enabled, sets a flag bit in the uplink TRAU frame to indicate caching.

For example, the flag bit may be 1 bit, 0 for caching or 1 for not caching; and if the cache identifier for the user equipment is enabled, the flag bit may be set to 0.
Step 1004: After receiving a HandoverCommand, a BTS of a source cell in which the handover of the user equipment is performed delivers the handover command to inner baseband DSP (hereafter referred to as source baseband DSP for short).
Step 1005: The source baseband DSP enables the cache identifier for the user equipment. Step 1006: When needing to process an uplink TRAU frame for the user equipment, the source baseband DSP determines whether the cache identifier for the user equipment is enabled, and if the cache identifier for the user equipment is enabled, sets a flag bit in the uplink TRAU frame to indicate caching.

For example, the flag bit may be 1 bit, 0 for caching or 1 for not caching; and if the cache identifier for the user equipment is enabled, the flag bit may be set to 0.
Step 1007: After waiting for sending of a complete interleaving block of one previous downlink TRAU to be complete, the source baseband DSP delivers a handover command to the user equipment.
Step 1008: After receiving the handover command, the user equipment performs a normal handover access process.
Step 1009: If the target baseband DSP fails to resolve that the user equipment has accessed the target cell, after the user equipment has returned to the source cell, the source baseband DSP receives an SABM (Set Asynchronous Balanced Mode, set asynchronous balanced mode) frame from the user equipment.
Step 1010: The source baseband DSP stops the enabled cache identifier for the user equipment, so that when the uplink TRAU frame for the user equipment subsequently needs processing, the flag bit in the uplink TRAU frame is set to indicate not caching.
Step 1011: After the handover of the user equipment fails, the BTS of the target cell of the handover receives a command for releasing the target channel, and sends the command to the target baseband DSP.
Step 1012: The target baseband DSP stops the enabled cache identifier for the user equipment, so that when the uplink TRAU frame for the user equipment subsequently needs processing, the flag bit in the uplink TRAU frame is set to indicate not caching.

With respect to a TC in the BSC, the cache flag bit in the uplink TRAU frame for the user equipment needs real-time monitoring, and if the cache flag bit indicates caching, the downlink TRAU frame for the user equipment needs to be cached and, after a handover of the user equipment ends, to be sent, and if the cache flag bit does not indicate caching, the downlink TRAU frame is processed normally and not cached.

In implementation, step 1003 and step 1006 are not necessarily subject to a chronological sequence, and if the target baseband DSP has an uplink TRAU frame that needs processing, step 1003 is performed; if the source baseband DSP has an uplink TRAU frame that needs processing, step 1006 is performed.

As shown in FIG. 11, a method for performing a handover according to an eleventh embodiment of the present application includes:
Step 1101: After receiving a handover activation channel command, a BTS of a target cell in which a handover of a user equipment is performed delivers the handover activation channel command to inner baseband DSP (hereafter referred to as target baseband DSP for short).
Step 1102: The target baseband DSP enables a cache identifier for the user equipment.
Step 1103: When needing to process an uplink TRAU frame for the user equipment, the target baseband DSP determines whether the cache identifier for the user equipment is enabled, and if the cache identifier for the user equipment is enabled, sets a flag bit in the uplink TRAU frame to indicate caching.

For example, the flag bit may be 1 bit, 0 for caching or 1 for not caching; and if the cache identifier for the user equipment is enabled, the flag bit may be set to 0.
Step 1104: After receiving a HandoverCommand, a BTS of a source cell in which the handover of the user equipment is performed delivers the handover command to inner baseband DSP (hereafter referred to as source baseband DSP for short).
Step 1105: The source baseband DSP enables the cache identifier for the user equipment.
Step 1106: When needing to process an uplink TRAU frame for the user equipment, the target baseband DSP determines whether the cache identifier for the user equipment is enabled, and if the cache identifier for the user equipment is enabled, sets a flag bit in the uplink TRAU frame to indicate caching.

For example, the flag bit may be 1 bit, 0 for caching or 1 for not caching; and if the cache identifier for the user equipment is enabled, the flag bit may be set to 0.
Step 1107: After waiting for sending of a complete interleaving block of one previous downlink TRAU to be complete, the source baseband DSP delivers a handover command to the user equipment.
Step 1108: After receiving the handover command, the user equipment performs a normal handover access process.
Step 1109: After detecting that the user equipment has accessed the target cell, the target baseband DSP reports to an upper layer network device BSC and the core network.
Step 1110: The target baseband DSP stops the enabled cache identifier for the user equipment, so that when the uplink TRAU frame for the user equipment subsequently needs processing, the flag bit in the uplink TRAU frame is set to indicate not caching.
Step 1111: During execution of the handover process, the handover fails due to a cause at an upper layer, for example, the handover fails due to a rejection by the core network as a result of an authentication cause or the like.
Step 1112: After the user equipment returns to the source cell, the source baseband DSP receives an SABM frame.
Step 1113: The source baseband DSP stops the enabled cache identifier for the user equipment, so that when the uplink TRAU frame for the user equipment subsequently needs processing, the flag bit in the uplink TRAU frame is set to indicate not caching. Subsequently, a normal process for a handover failure is performed. For details, reference may be made to the 3GPP TS 44018 protocol, and is therefore not described herein again.

In implementation, step 1103 and step 1106 are not necessarily subject to a chronological sequence, and if the target baseband DSP has an uplink TRAU frame that needs processing, step 1103 is performed; if the source baseband DSP has an uplink TRAU frame that needs processing, step 1106 is performed.

As can be seen from the above that:
according to embodiments of the present application, a downlink valid data frame for the user equipment is cached during a handover process of a user equipment, and the cached downlink valid data frame is sent after a handover of the user equipment ends. According to the embodiments of the present application, user data during a handover process is cached and, after a handover ends, is sent, and in this way, data is not transmitted over an air interface during the handover, which prevents the user data from being lost at the air interface during the handover process and shortens a length of downlink transmission interference time. Because duration of data retransmission is much longer than duration caused by data caching, delay of train control data can be shortened.

A person skilled in the art should understand that embodiments of the present application can provide a method, a system or a computer program product. As such, the present application may employ an embodiment in terms of entirely hardware, an embodiment in terms of entirely software or an embodiment in terms of a combination of software and hardware. In addition, the present application can be employed in a form of one or more computer program products implemented on a computer-usable storage medium which includes a computer usable program code (including but not limited to a disk storage, a CD-ROM, an optic storage, and the like).

The present application is described with reference to a flowchart and/or a block diagram of a method, device (system) and a computer program product according to the embodiments of the present application. It should be understood that each process and/or block of a flowchart and/or a block diagram, and a combination of a process/a block of a flowchart and/or a block diagram can be implemented by computer program instructions. These computer program instructions can be provided to a general purpose computer, a special purpose computer, an embedded processor or a processor of other programmable data processing device to produce a machine, so that instructions executed by a computer or a processor of other programmable data processing device produce an apparatus to implement specific functions in one or more processes of a flowchart and/or one or more blocks of a block diagram.

These computer program instructions may also be stored in a computer-readable storage medium which can instruct a computer or other programmable data processing devices to work in a specific manner, so that instructions stored in the computer-readable storage medium generate a manufacture including an instruction apparatus, where the instruction apparatus implements specific functions in one or more processes of a flowchart and/or one or more blocks of a block diagram.

These computer program instructions may also be loaded on a computer or other programmable data processing device, so that a series of operation steps may be performed on the computer or other programmable devices to generate processing that is implemented by the computer, and therefore, instructions executed on the computer or other programmable devices provide steps to implement specific functions in one block or more block of one or more procedures and/or block diagrams.

While exemplary embodiments of the present application are described, a person skilled in the art may make other variations and modifications to these embodiments after knowing a basic creative concept. As such, the appended claims intend to be interpreted as including the exemplary embodiments and all variations and modifications shall fall within the scope of the present application.

Apparently, a person skilled in the art may derive various modifications and variations to the present application without departing from the spirit and scope of the present application. In this way, if these modifications and variations to the present application are within the scope of the claims and the equivalent technology thereof, the present application intends to include these modifications and variations.

## Claims

1. A method for transmitting data, wherein the method comprises:
caching, by a first network side device, a downlink valid data frame for a user equipment during a handover process of the user equipment; and
sending, by the first network side device, the cached downlink valid data frame after a handover of the user equipment ends.

2. The method according to claim 1, wherein the caching, by a first network side device, a downlink valid data frame for a user equipment during a handover process of the user equipment comprises:
after receiving, over a user data link corresponding to the user equipment, an uplink valid data frame comprising a flag bit indicating caching, caching, by the first network side device, a downlink valid data frame subsequently received over the user data link, wherein the flag bit indicating caching is set in the uplink valid data frame by a second network side device during the handover process of the user equipment; and
the sending, by the first network side device, the cached downlink valid data frame after a handover of the user equipment ends comprises:
after receiving, over the user data link corresponding to the user equipment, an uplink valid data frame not comprising a flag bit indicating caching, stopping caching, by the first network side device, and then sending the cached downlink valid data frame, wherein the flag bit not indicating caching is set in the uplink valid data frame by the second network side device after the handover of the user equipment ends.

3. The method according to claim 2, wherein the first network side device is a transcoder/rate adaptor unit TC in a base station controller BSC, and the second network side device is a base transceiver station BTS.

4. The method according to claim 1, wherein the caching, by a first network side device, a downlink valid data frame for a user equipment during a handover process of the user equipment comprises:
after receiving, from a second network side device, a notification message for caching, caching, by the first network side device, the downlink valid data frame for the user equipment that is received over a user data link corresponding to the user equipment, wherein the notification message for caching is sent by the second network side device during the handover process of the user equipment; and
the sending, by the first network side device, the cached downlink valid data frame after a handover of the user equipment ends comprises:
after receiving, from the second network side device, a notification message for stopping caching, stopping caching, by the first network side device, and then sending the cached downlink valid data frame, wherein the notification message for stopping caching is sent by the second network side device after the handover of the user equipment ends.

5. The method according to claim 4, wherein the first network side device is a transcoder/rate adaptor unit TC in a BSC, and the second network side device is a signaling processing unit in the BSC;
the first network side device is an interworking function unit IWF, and the second network side device is a mobile service switching center MSC.

6. The method according to any one of claims 1 to 5, wherein before the caching, by the first network side device, the downlink valid data frame for the user equipment that is received over a user data link corresponding to the user equipment, the method further comprises:
determining, by the first network side device, that the user equipment has entered a synchronization state.

7. The method according to any one of claims 1 to 6, wherein the method further comprises:
while caching the downlink valid data frame for the user equipment, sending, by the first network side device, a downlink padding data frame.

8. A method for transmitting data, wherein the method comprises:
notifying, by a second network side device during a handover process of a user equipment, the first network side device of caching a downlink valid data frame received over the user data link; and
notifying, by the second network side device after a handover of the user equipment ends, the first network side device of stopping caching and of sending the cached downlink valid data frame.

9. The method according to claim 8, wherein the notifying, by a second network side device during a handover process of a user equipment, the first network side device of caching a downlink valid data frame received over the user data link comprises:
setting, by the second network side device during the handover process of the user equipment, a protocol reservation flag bit in an uplink valid data frame for the user equipment to indicate caching, and sending, to the first network side device over the user data link corresponding to the user equipment, the uplink valid data frame comprising the flag bit indicating caching, to notify the first network side device of caching the downlink valid data frame received over the user data link; and
the notifying, by the second network side device after a handover of the user equipment ends, the first network side device of stopping caching and of sending the cached downlink valid data frame comprises:
setting, by the second network side after the handover of the user equipment ends, a protocol reservation flag bit in an uplink valid data frame for the user equipment to indicate not caching; and sending, to the first network side device over the user data link corresponding to the user equipment, the uplink valid data frame comprising the flag bit indicating not caching, to notify the first network side device of stopping caching and of sending the cached downlink valid data frame.

10. The method according to claim 9, wherein before the setting, by the second network side device during the handover process of the user equipment, a protocol reservation flag bit in an uplink valid data frame for the user equipment to indicate caching, the method further comprises:
enabling, by the second network side device, a cache identifier for the user equipment after receiving a command for a handover; and
the setting, by the second network side device during the handover process of the user equipment, a protocol reservation flag bit in an uplink valid data frame for the user equipment to indicate caching comprises:
while processing the uplink valid data frame for the user equipment, determining, by the second network side device, whether the cache identifier for the user equipment is enabled; and
after determining that the cache identifier for the user equipment is enabled, setting the protocol reservation flag bit in the uplink valid data frame for the user equipment to indicate caching.

11. The method according to claim 10, wherein before the setting, by the second network side device after the handover of the user equipment ends, a protocol reservation flag bit in an uplink valid data frame for the user equipment to indicate not caching, the method further comprises:
stopping, by the second network side device, the enabled cache identifier for the user equipment after the handover of the user equipment ends; and
the setting, by the second network side device, a protocol reservation flag bit in an uplink valid data frame for the user equipment to indicate not caching comprises:
while processing the uplink valid data frame for the user equipment, determining, by the second network side device, whether the cache identifier for the user equipment is enabled; and
after determining that the cache identifier for the user equipment is not enabled, setting the protocol reservation flag bit in the uplink valid data frame for the user equipment to indicate not caching.

12. The method according to any one of claims 9 to 11, wherein the first network side device is a transcoder/rate adaptor unit TC in a base station controller BSC, and the second network side device is a base transceiver station BTS.

13. The method according to claim 8, wherein the notifying, by a second network side device during a handover process of a user equipment, the first network side device of caching a downlink valid data frame received over the user data link comprises:
sending, by the second network side device to the first network side device during the handover process of the user equipment, a notification message for caching, to notify the first network side device of caching the downlink valid data frame received over the user data link; and
the notifying, by the second network side device after a handover of the user equipment ends, the first network side device of stopping caching and of sending the cached downlink valid data frame comprises:
sending, by the second network side device to the first network side device after the handover of the user equipment ends, a notification message for stopping caching, to notify the first network side device of stopping caching and of sending the cached downlink valid data frame.

14. The method according to claim 13, wherein the first network side device is a transcoder/rate adaptor unit TC in a BSC, and the second network side device is a signaling processing unit in the BSC;
the first network side device is an interworking function unit IWF, and the second network side device is a mobile service switching center MSC.

15. The method according to any one of claims 8 to 14, wherein before the sending, by the second network side device to the first network side device over the user data link link corresponding to the user equipment, the uplink valid data frame comprising the flag bit indicating caching, the method further comprises:
when the second network side device needs to send a handover command to the user equipment, if a downlink valid data frame for the user equipment is currently being sent, sending the handover command to the user equipment after sending of the downlink valid frame data for the user equipment that is currently being sent is complete.

16. A first network side device for transmitting data, wherein the first network side device comprises:
a caching module, configured to cache a downlink valid data frame for a user equipment during a handover process of the user equipment; and
a sending module, configured to send the cached downlink valid data frame after a handover of the user equipment ends.

17. The device according to claim 16, wherein the caching module is specifically configured to:
after receiving, over a user data link corresponding to the user equipment, an uplink valid data frame comprising a flag bit indicating caching, cache a downlink valid data frame subsequently received over the user data link, wherein the flag bit indicating caching is set in the uplink valid data frame by a second network side device during the handover process of the user equipment; stop caching after receiving, over the user data link corresponding to the user equipment, an uplink valid data frame not comprising a flag bit indicating caching, wherein the flag bit not indicating caching is set in the uplink valid data frame by the second network side device after the handover of the user equipment ends; and
the sending module is specifically configured to:
send the cached downlink valid data frame after the caching module stops caching.

18. The device according to claim 17, wherein the first network side device is a transcoder/rate adaptor unit TC in a base station controller BSC, and the second network side device is a base transceiver station BTS.

19. The device according to claim 16, wherein the caching module is specifically configured to:
after receiving, from a second network side device, a notification message for caching, cache the downlink valid data frame for the user equipment that is received over a user data link corresponding to the user equipment, wherein the notification message for caching is sent by the second network side device during the handover process of the user equipment; and stop caching after receiving, from the second network side device, a notification message for stopping caching, wherein the notification message for stopping caching is sent by the second network side device after the handover of the user equipment ends; and
the sending module is specifically configured to:
send the cached downlink valid data frame after the caching module stops caching.

20. The device according to claim 19, wherein the first network side device is a transcoder/rate adaptor unit TC in a BSC, and the second network side device is a signaling processing unit in the BSC;
the first network side device is an interworking function unit IWF, and the second network side device is a mobile service switching center MSC.

21. The device according to any one of claims 16 to 20, wherein the caching module is specifically configured to:
if it is determined that the user equipment has entered a synchronization state, cache the downlink valid data frame for the user equipment that is received over the user data link corresponding to the user equipment.

22. The device according to any one of claims 16 to 21, wherein the sending module is further configured to:
while the caching module is caching the downlink valid data frame for the user equipment, send a downlink padding data frame.

23. A second network side device for transmitting data, wherein the second network side device comprises:
a first notification module, configured to notify, during a handover process of a user equipment, the first network side device of caching a downlink valid data frame received over the user data link;
a second notification module, configured to notify, after a handover of the user equipment ends, the first network side device of stopping caching and of sending the cached downlink valid data frame.

24. The device according to claim 23, wherein the first notification module is specifically configured to:
during the handover process of the user equipment, set a protocol reservation flag bit in an uplink valid data frame for the user equipment to indicate caching, and send, to the first network side device over the user data link corresponding to the user equipment, the uplink valid data frame comprising the flag bit indicating caching, to notify the first network side device of caching the downlink valid data frame received over the user data link; and
the second notification module is specifically configured to:
after a handover of the user equipment ends, set a protocol reservation flag bit in an uplink valid data frame for the user equipment to indicate not caching, and send, to the first network side device over the user data link corresponding to the user equipment, the uplink valid data frame comprising the flag bit indicating not caching, to notify the first network side device of stopping caching and of sending the cached downlink valid data frame.

25. The device according to claim 24, wherein the first notification module is specifically configured to:
enable a cache identifier for the user equipment after receiving a command for a handover; determine, while processing the uplink valid data frame for the user equipment, whether the cache identifier for the user equipment is enabled; and after determining that the cache identifier for the user equipment is enabled, set the protocol reservation flag bit in the uplink valid data frame for the user equipment to indicate caching.

26. The device according to claim 25, wherein the second notification module is specifically configured to:
stop the enabled cache identifier for the user equipment after the handover of the user equipment ends; determine, while processing the uplink valid data frame for the user equipment, whether the cache identifier for the user equipment is enabled; and after determining that the cache identifier for the user equipment is not enabled, set the protocol reservation flag bit in the uplink valid data frame for the user equipment to indicate not caching.

27. The device according to any one of claims 24 to 26, wherein the first network side device is a transcoder/rate adaptor unit TC in a base station controller BSC, and the second network side device is a base transceiver station BTS.

28. The device according to claim 23, wherein the first notification module is specifically configured to:
send, to the first network side device during the handover process of the user equipment, a notification message for caching, to notify the first network side device of caching the downlink valid data frame received over the user data link; and
the second notification module is specifically configured to:
send, to the first network side device after a handover of the user equipment ends, a notification message for stopping caching, to notify the first network side device of stopping caching and of sending the cached downlink valid data frame.

29. The device according to claim 28, wherein the first network side device is a transcoder/rate adaptor unit TC in a BSC, and the second network side device is a signaling processing unit in the BSC;
the first network side device is an interworking function unit IWF, and the second network side device is a mobile service switching center MSC.

30. The device according to any one of claims 23 to 29, wherein the first notification module is further configured to:
when a handover command needs to be sent to the user equipment, if a downlink valid data frame for the user equipment is currently being sent, send the handover command to the user equipment after sending of the downlink valid frame data for the user equipment that is currently being sent is complete.
